# EUROPEAN PATENT APPLICATION

(11) **EP 3 950 251 A1**
(43) Date of publication of application: **09.02.2022**
(21) Application number: 20781984.8
(22) Date of filing: 27.03.2020
(51) Int. Cl.: B29B 15/14, B29K 105/08, D06M 10/00, D06M 101/40, D06M 11/74, D06M 15/55, D06M 23/08

(54) **OPEN CARBON FIBER BUNDLE, FIBER-REINFORCED COMPOSITE MATERIAL, AND METHOD FOR MANUFACTURING OPEN CARBON FIBER BUNDLE**

(30) Priority: 29.03.2019 JP 2019069046
(71) Applicant: SEKISUI CHEMICAL CO., LTD., Osaka-shi Osaka 530-8565 (JP)
(72) Inventor: NAKATSUKA, Kazuki, Kyoto 601-8105 (JP)
(74) Representative: Ter Meer Steinmeister & Partner
(86) International application number: PCT/JP2020/014145
(87) International publication number: WO 2020/203821

(57) **Abstract**

[Problem]

Provided is a method for producing an opened fibre bundle which has a good opened state, excellent resin impregnation properties, and excellent compatibility with a matrix resin, with high productivity.

[Problem to be Solved]

Disclosed is an opened carbon fibre bundle, wherein particles having a volume average particle size D50 of 1 µm to 13 µm and a volume average particle size D90 of 13 µm or less are comprised in a carbon fibre bundle and a method for producing an opened carbon fibre bundle, comprising the step of bringing a carbon fibre bundle into contact with a fibre opening solution comprising the particles and an organic solvent.

## Description

### BACKGROUND OF THE INVENTION

### [Field of the Invention]

The present invention relates to an opened carbon fibre bundle using carbon fibres as reinforcing fibres, a fibre reinforced composite material containing the opened carbon fibre bundle, and a method for producing the opened carbon fibre bundle.

### [Background Art]

Since a fibre reinforced composite material in which a matrix resin is reinforced with reinforcing fibres such as carbon fibres is of light weight while having excellent strength, rigidity, and dimensional stability, etc., it is widely used in various fields such as office equipment, automobiles, aircrafts, vehicles, computers such as housings of IC trays and laptops, water stops, and windmill blades, and its demand is increasing year by year.

Since the carbon fibres used in the fibre reinforced composite material have different chemical compositions and molecular structures from those of the matrix resin, there is a problem that theoretical strength cannot be obtained because compatibility with the matrix resin is low and the bonding interface between the carbon fibres and the matrix resin becomes an brittle point.

A fibre reinforced composite material using a thermoplastic resin as the matrix resin is obtained by molding compound pellets via various methods such as injection molding, injection compression molding, extrusion molding, and press molding. In these molding methods, reinforcing fibres are often used in the form of a fibre bundle (tow). When the reinforcing fibres are used in the form of a fibre bundle, the open state of the fibre bundle greatly affects the impregnation of the thermoplastic resin, and the impregnation greatly affects the mechanical strength of the fibre reinforced composite material.

For example, when producing a fibre reinforced composite material using a thermoplastic resin as a matrix resin, a method generally used is in which a film made of the thermoplastic resin and a reinforcing fibre bundle are heated under pressure (film impregnation method). In this case, if the opening between the carbon fibres constituting the reinforcing fibre bundle is insufficient, the thermoplastic resin is not sufficiently impregnated between the carbon fibres, and it is known that the mechanical strength of the fibre reinforced composite material decreases due to the resin-free portion (void portion).

Therefore, conventionally, various attempts have been made to improve the impregnation property of the thermoplastic resin into the carbon fibre bundle by improving the compatibility between the carbon fibre and the matrix resin or by carrying out fibre opening treatment to widen the spacing between the carbon fibres. For example, Patent Documents 1 and 2 disclose that a sizing agent composed of synthetic resin particles is adhered to the fibre surface of the carbon fibre bundle. In addition, Patent Document 3 discloses that a spacer is formed on the carbon fibre surface by heating after impregnating the carbon fibre into a monomer solution of a naphthoxazine resin. Furthermore, Patent Document 4 discloses a carbon fibre in which silica particles and amorphous carbon are adhered to the surface.

### [Prior Art Documents]

### [Patent Documents]

Patent Document 1: JP2013-177705 A1
Patent Document 2: JP2014-122439 A1
Patent Document 3: JP2014-162116 A1
Patent Document 4: JP2015-93883 A1

### SUMMARY OF THE INVENTION

### [Problems to be Solved by the Invention]

However, as disclosed in Patent Documents 1 and 2, when a thermoplastic resin sheet and a reinforcing fibre bundle are pressurized while heating, in the carbon fibre having synthetic resin particles adhered to the surface, the synthetic resin particles are destroyed or melted by pressure or heat. Therefore, even if the carbon fibre is opened by the synthetic resin particles, it is difficult to maintain the opened state sufficiently for the time until the impregnation of the resin is completed, and as a result, there is a problem that the thermoplastic resin cannot be sufficiently impregnated between the carbon fibres.

A certain gap is formed between the fibres by spacers in the carbon fibre composite material described in Patent Document 3, but in order to improve impregnation property of the thermoplastic resin, it is desirable to further open the fibre bundle to increase the gap between the fibres. In addition, since the spacer is formed by the naphthoxazine resin according to the method described in Patent Document 3, there is a problem that polymerization reaction of the naphthoxazine resin requires heating for a long time, and the productivity per hour is insufficient.

Further, the carbon fibre bundle described in Patent Document 4 is intended to add colloidal silica particles having a particle size of 80 to 150 nm (catalog value) to the naphthoxazine resin solution to control the tension of the carbon fibre surface, and a problem has been found that the fibre opening effect of the present invention cannot be obtained with such an extremely small particle size.

The present invention has been made in view of the above problems, and it is an object of the present invention to provide an opened fibre bundle having a good opened state, excellent resin impregnation properties, and excellent compatibility with a matrix resin. Another object of the present invention is to produce an opened fibre bundle having a good opened state, excellent resin impregnation properties, and excellent compatibility with a matrix resin with high productivity.

### [Means for solving the problem]

As a result of intensive research, the present inventors have found that the above-mentioned problems can be solved by using particles having a specific particle size for opening the carbon fibre bundles, and have thus completed the following invention. In other words, the gist of the present invention is as follows.

[1] An opened carbon fibre bundle comprising a carbon fibre bundle and particles having a volume average particle size D50 of 1 µm to 13 µm and a volume average particle size D90 of 13 µm or less in the carbon fibre bundle.
[2] The opened carbon fibre bundle according to [1], wherein the content of the particles contained in the opened carbon fibre bundle is 0.01 to 0.20 parts by mass per 100 parts by mass of the carbon fibres.
[3] The opened carbon fibre bundle according to [1] or [2], wherein the particles are adhered to the surface of the carbon fibre by a synthetic resin or a carbon allotrope.
[4] The opened carbon fibre bundle according to any one of [1] to [3] wherein the synthetic resin is an epoxy resin and the carbon allotrope comprises amorphous carbon.
[5] The opened carbon fibre bundle according to any one of [1] to [4] wherein the minimum particle size of the particles is 1.5 µm or more.
[6] A fibre-reinforced composite material comprising an opened carbon fibre bundle according to any one of [1] to [5] and a matrix resin impregnated into the opened carbon fibre bundle.
[7] A method for producing an opened carbon fibre bundle, comprising the step of bringing a carbon fibre bundle into contact with a fibre opening solution comprising particles having a volume average particle size D50 of 1 µm to 13 µm and a volume average particle size D90 of 13 µm or less and an organic solvent.
[8] The method according to [7], wherein the particles are obtained through a classification step of removing particles having a maximum particle size or more.
[9] The method according to [7] or [8], wherein the particle concentration of the fibre opening solution is a concentration of 1 to 10 % by mass.

### [Effect of the invention]

According to the present invention, it is possible to provide an opened carbon fibre bundle having a good opened state and excellent resin impregnation property. Also, the opened carbon fibre bundle having a good opened state and excellent resin impregnation property can be produced in a high productivity.

A fibre reinforced composite material obtained by impregnating a matrix resin into the opened carbon fibre bundle obtained in the present invention has small unimpregnated portion of the resin and excellent interfacial adhesion strength between the fibre and the resin, and therefore has high mechanical properties.

### BRIEF DESCRIPTION OF THE DRAWINGS

Fig. 1 shows the particle size distribution of silica particles used in Comparative Example 1.
Fig. 2 shows the particle size distribution of silica particles used in Example 2.
Fig. 3 shows an SEM observation image of the surface of the opened carbon fibre bundle in Example 1.
Fig. 4 shows an SEM observation image of the surface of the opened carbon fibre bundle in Comparative Example 2.

### MODE FOR CARRYING OUT THE INVENTION

One example of a preferred embodiment of the present invention will be described with reference to the drawings below. However, the embodiments described below are examples for describing the present invention, and the present invention shall not be limited to the embodiments described below in any way.

### [Opened Carbon Fibre Bundle]

The opened carbon fibre bundle according to the present invention comprises a carbon fibre bundle comprising a plurality of carbon fibres and particles arranged between the carbon fibres, wherein at least a part between the carbon fibres has a fibre interval of 1 µm or more.

### (Carbon fibre)

Examples of the carbon fibre used in the present invention include PAN-based carbon fibre, PITCH-based carbon fibre and the like, and PAN-based carbon fibre is preferably used. The average diameter of the carbon fibre is normally 2 µm or more, more preferably 4 µm or more, more preferably 6 µm or more. The average diameter of the carbon fibre is preferably 30 µm or less, more preferably 20 µm or less. In the present invention, the average diameter of the carbon fibre is an arithmetic average value of the fibre diameters of 100 carbon fibres selected randomly. In addition, the fibre diameter refers to the diameter of a cross-section (substantially circular) in a cross-section along a direction orthogonal to the longitudinal direction of the fibre.

Each carbon fibre is generally a single fibre (filament), and a plurality of carbon fibres are gathered together to form a carbon fibre bundle (tow). The number of carbon fibres forming each carbon fibre bundle (the number of filaments contained in one strand) is usually 1000 or more, preferably 3000 or more, more preferably 12000 or more, and further preferably 24000 or more, and the upper limit is not particularly limited but is usually 100000 or less, preferably 50000 or less, more preferably 48000 or less, and further preferably 30000 or less.

In general, as the number of filaments in the carbon fibre bundles increases, the mechanical properties per filament and the impregnation property of the resin tend to decrease, but since the price per weight of the carbon fibre bundles also decreases, it is possible to select a carbon fibre bundle having an appropriate number of filaments depending on the application.

When a unidirectional continuous fibre is used, the number of carbon fibre bundles used in the present invention is preferably 48000 to 100000, and when a woven carbon fibre bundle is used, the number of carbon fibre bundles used is preferably 12000 to 48000.

The carbon fibre bundle may be used in various forms. For example, it may be used in forms of unidirectional continuous fibres (UniDirection fibres) in which a plurality of fibre bundles is oriented in one direction, a woven fabric formed by weaving a plurality of fibre bundles, a knitted fabric formed by knitting fibre bundles, a nonwoven fabric formed by a plurality of fibre bundles and thermoplastic resin fibres, and the like. Among these, unidirectional continuous fibres and woven fabrics are preferred, and a woven fabric having a high mechanical property in the longitudinal and lateral directions is more preferred. The woven fabric may be woven by a plain weave, a twill weave, a satin weave or the like, and a plain weave having isotropy or a twill weave is preferable. Preferred as the knitted fabric is a non-crimp fabric in which the fibres are arranged in a straight advancing direction in each fibre orientation direction.

Further, without particular limitation, a plurality of carbon fibre bundles is preferably in the form of a sheet. When the reinforcing fibre bundles are in a sheet form, the basis weight is normally 20 to 800 g/m², preferably 100 to 400 g/m². When the basis weight of the reinforcing fibre bundles is 20 g/m² or more, the mechanical strength improves of the fibre reinforced composite material formed by using the opened carbon fibre bundle according to the present invention. When the basis weight of the reinforcing fibre is 800 g/m² or less, the matrix resin can be uniformly impregnated between the carbon fibres, and the mechanical strength of the fibre reinforced composite material improves. The basis weight is preferably 150 to 300 g/m².

### (Particles)

As for the particles used in the present invention, both organic particles and inorganic particles can be used. As the organic particles, any particles composed of a thermoplastic resin or a thermosetting resin can be used as long as they are uneasily deformed by pressure and temperature at which the matrix resin is impregnated into the open carbon fibre bundle, and examples thereof include a divinylbenzene crosslinked polymer, phenolic resin, polyamide resin, polyacrylic resin, acryl-styrene copolymer, epoxy resin, polyacrylonitrile resin, benzoguanamine resin, polyester resin, polyurethane resin, melamine resin and the like. Among these, particles composed of a divinylbenzene crosslinked polymer, phenolic resin, polyamide resin, polyacrylic resin, acryl-styrene copolymer, and epoxy resin can be suitably used because the particles are uneasily deformed when heated and pressurized. Examples of the inorganic particles include silica particles, alumina particles, titanium oxide particles, and carbon particles. One of these particles may be used alone or two or more in combination. Among these particles, silica particles are preferably used from the viewpoint of adhesiveness with the matrix resin and the carbon allotrope precursor. The particles may be subjected to surface hydroxylation by boiling water or functionalization by a silane coupling agent.

The volume-average particle size D50 of the particles used in the opened carbon fibre bundles of the present invention is 1 to 13 µm. From the viewpoint of ensuring the opening width between the fibres, the volume-average particle size D50 is preferably 1.5 µm or more, more preferably 2 µm or more, further more preferably 3 µm or more, while the upper limit is preferably 12 µm or less, more preferably 11 µm or less, further more preferably 10 µm or less. When the volume-average particle size D50 of the particles used in the opened carbon fibre bundle of the present invention is set within the above ranges, the fibre bundle can be sufficiently opened and impregnation property can be improved even in the case of a matrix resin having high viscosity. In the present invention, the volume-average particle size means a numerical value measured by a particle size distribution meter of a dynamic light scattering type (for example, model number: MT3300, manufactured by Microtrack Bell Co., Ltd.), and the volume-average particle sizes D90, D50, D10 mean particle diameters of 90%, 50% and 10% of the cumulative volume value of the particle size distribution.

The volume-average particle size D90 of the particles used in the opened carbon fibre of the present invention is 13 µm or less. From the viewpoint of introducing particles between the fibres, the volume-average particle size D90 is preferably 11 µm or less, preferably 10 µm or less, further preferably 9 µm or less, particularly preferably 8 µm or less. On the other hand, the lower limit is usually 1 µm or more, preferably 2 µm or more, more preferably 3 µm or more, and further preferably 4 µm or more. By setting the volume average particle size D90 within the above ranges, the proportion of large particles having an adverse effect on fibre opening can be reduced and the fibre opening effect can be further improved.

The volume-average particle size D10 of the particles of the present invention is not particularly limited, but is preferably 2.1 µm or more, more preferably 2.5 µm or more, further preferably 3 µm or more, 5 µm, while the upper limit is preferably 5 µm or less, more preferably 4 µm or less, further preferably 3 µm or less, from the viewpoint of reducing the proportion of small-diameter particles that do not contribute to fibre opening and the viewpoint of improving the fibre opening effect. When D10 is in the above ranges, a carbon film used for adhesion of particles having small contribution to fibre opening can be suppressed from being uselessly consumed, and fibre opening effect tends to be further improved.

The total amount of particles attaching to the carbon fibres in the opened carbon fibre bundles is usually 0.01 to 5 % by mass, preferably 0.05 to 3 % by mass, and more preferably 0.08 to 1 % by mass with respect to 100 parts by weight of the carbon fibre bundles. When the amount of particles attaching to the carbon fibres is not less than the lower limit, the carbon fibre bundles can be appropriately opened. When the amount of particles attaching to the carbon fibres is not more than the upper limit, the carbon fibre bundles can contain more particles than necessary, thereby preventing the fibre content from decreasing and the mechanical properties from decreasing.

### (Coated Particles)

The particles described above may be coated particles comprising particles and a carbon allotrope covering at least a part of the surface of the particles. A coated particle is a core-shell particle in which the particle acts as the core and the surface is made of a carbon allotrope. The entire surface of each particle may be covered with carbon allotropes, or a portion of the surface may be covered with carbon allotropes.

The coated particles enter between the carbon fibres in each fibre bundle, thereby opening the carbon fibre bundle. The opened carbon fibre bundle may have a structure in which the carbon fibres are cross-linked by the coated particles entering between the carbon fibres. The term "cross-linked" means having a structure in which the coated particles entering between the carbon fibres are arranged so as to cross-link at least two carbon fibres. In addition, the coated particles may be adhered to the carbon fibre via a carbon allotrope. Since the coated particles cross-link the carbon fibres and adhere between the carbon fibres, the open state of the fibre bundle can be more firmly maintained.

Further, in the present invention, the surface of the carbon fibre may be covered with the carbon allotrope in at least a part of the carbon fibre, such as a part contacting the coated particles of the carbon fibre. In this case, the carbon allotrope covering the surface of the particles can have an embodiment in which the carbon allotrope covering the surface of the particles is connected to the carbon allotrope covering the surface of the carbon fibre.

The total attached amount of the particles and the carbon allotropes in the opened carbon fibre bundles is usually 0.1 to 10 % by mass, preferably 0.5 to 5 % by mass, and more preferably 1 to 2 % by mass based on the opened carbon fibre bundles. When the attached amount is set equal to or higher than the lower limit, the carbon fibre bundles can be appropriately opened. When the adhesion amount is set equal to or lower than the upper limit, the carbon fibre bundles can contain coated particles more than necessary so that the fibre content is reduced, and mechanical properties can be prevented from declining.

The carbon allotrope constituting the coating film in the coated particles means a carbonaceous material which is an allotrope of carbon, or a general carbon material such as a graphitic material, and includes formless carbon, graphite, diamond, and the like. As the formless carbon, amorphous carbon can be mentioned. Among these, formless carbon is preferable, and amorphous carbon is more preferable.

It is preferable that the carbon allotrope is derived from carbon of the synthetic resin. In other words, the carbon allotrope is preferably obtained by carbonizing or graphitizing the synthetic resin. Examples of the synthetic resin include thermoplastic resins such as acrylic resins, polyethylene terephthalate resins, polycarbonate resins, and thermosetting resins such as phenolic resins, epoxy resins, melamine resins, urea resins, unsaturated polyester resins, alkyd resins, polyurethanes, and oxazine resins. The resin is not particularly limited as long as the polymerization reaction proceeds by heating, but oxazine resins are preferable from the viewpoint that the temperature during carbonization can be lowered and a strong amorphous carbon film can be formed. Examples of the oxazine resins include benzoxazine resins and naphthoxazine resins. Among these, naphthoxazine resins are preferable because they are easily carbonized at a lower temperature. Acrylic resins are also preferable as the synthetic resin.

An "oxazine resin" is a resin having a six membered ring added to a benzene ring or a naphthalene ring, wherein the six membered ring contains oxygen and nitrogen. The benzoxazine resin has at least a skeleton represented by chemical formula (1) shown below. The naphthoxazine resin has at least a skeleton represented by chemical formula (2) shown below.

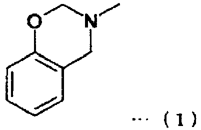

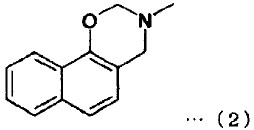

The coated particles in the present invention are formed by forming a coating composed of a carbon allotrope on at least a part of the surface of the particles, and therefore the average particle size of the coated particles tends to be larger than the average particle size of the particles described above. Specifically, the average particle size of the coated particles is preferably 1 to 30 µm. When the average particle size is 1 µm or more, the fibre bundle can be appropriately opened by the coated particles. When the average particle size is 30 µm or less, the composite particles can easily enter between the carbon fibres in each fibre bundle. The average particle size of the coated particles is preferably 1 to 25 µm, more preferably 2 to 20 µm, and further preferably 4 to 15 µm, from the viewpoint of opening the fibre bundle to a larger extent.

In the present invention, the average particle size of the composite particles is a value measured in the following manner. First, an enlarged photograph of 400 times the size of the opened carbon fibre bundle is taken using an electron microscope. In the obtained photomicrograph, the diameters of 100 randomly selected composite particles are measured by dimensional measurement on an image, and the arithmetic mean value thereof is defined as the average particle size of the composite particles. The particle diameter of the composite particles is defined as the diameter of a circle having the smallest diameter that can surround the composite particles.

Although the carbon fibres are usually cross-linked via one coated particle in the direction in which they are cross-linking, the carbon fibres in between may be cross-linked via two or more coated particles in the direction in which the two or more coated particles are cross-linking. When two or more coated particles are continuous in the direction in which the two or more coated particles are cross-linking between the carbon fibres, one or two or more coated particles may be further connected to a plurality of coated particles connected to one of the carbon fibres, and the one or two or more coated particles may be connected to the other carbon fibre. Further, between the carbon fibres, more coated particles may be continuously cross-linking.

The distance between adjacent carbon fibres in the opened carbon fibre bundle is at least partially 1 µm or more, preferably 5 µm or more, and more preferably 10 µm or more. When the distance between a part of the carbon fibres is within the above ranges or more, the matrix resin tends to be easily impregnated into the center of the opened fibre bundles by utilizing voids between the fibres.

### [Method for Producing Opened Carbon Fibre Bundle]

The method for producing an opened carbon fibre bundle according to the present invention comprises the step of bringing a carbon fibre bundle comprising a plurality of carbon fibres into contact with a fibre opening solution, and the step of heating the carbon fibre bundle brought into contact with the fibre opening solution. Hereinafter, the method for producing an opened carbon fibre bundle will be described in more details.

The fibre opening solution used in the production method above includes the particles described above and a monomer capable of forming a synthetic resin (hereinafter also simply referred to as a "monomer"). The fibre opening solution can be prepared by mixing the monomer and the particles, but preferably a solvent is further added to dissolve the monomer in the solvent.

The monomer reacts to form a synthetic resin. The synthetic resin is preferably an oxazine resin or an acrylic resin as described above, but when the synthetic resin is an oxazine resin, the monomer is phenols, formaldehyde, and amines. The oxazine resin is preferably a naphthoxazine resin as described above.

When the oxazine resin is a naphthoxazine resin, dihydroxynaphthalenes are preferable as the phenols. There are many isomers of dihydroxynaphthalenes. Specific examples of dihydroxynaphthalenes include, for example, 1,3-dihydroxynaphthalene, 1,5-dihydroxynaphthalene, 1,6-dihydroxynaphthalene, 1,7-dihydroxynaphthalene, 2,3-dihydroxynaphthalene, 2,6-dihydroxynaphthalene and 2,7-dihydroxynaphthalene. Among these, 1,5-dihydroxynaphthalene and 2,6-dihydroxynaphthalene are preferable and 1,5-dihydroxynaphthalene is more preferable from the viewpoint of high reactivity. One of these dihydroxynaphthalenes may be used alone or two or more in combination.

Formaldehyde is preferably used as formalin. In addition to formaldehyde and water, a small amount of methanol may be added as a stabilizer to formalin. In place of formaldehyde, paraformaldehyde may be used.

The blending amount of formaldehyde in the fibre opening solution is preferably 1.2 to 2.8 moles per mole of dihydroxynaphthalene, and more preferably 1.4 to 2.6 moles per mole of dihydroxynaphthalene.

As the amines, an aliphatic amine represented by general formula R-NH₂ is preferably used. In the general formula R-NH₂, it is preferable that R is an alkyl group having 5 or less carbon atoms. Examples of the alkyl group having 5 or less carbon atoms include a methyl group, ethyl group, n-propyl group, isopropyl group, cyclopropyl group, n-butyl group, isobutyl group, s-butyl group, t-butyl group, cyclobutyl group, cyclopropylmethyl group, n-pentyl group, cyclopentyl group, cyclopropylethyl group and cyclopropylmethyl group. Preferred as the alkyl group having 5 or less carbon atoms are a methyl group, ethyl group and propyl group.

In particular, preferably used as the amines are methylamine, ethylamine, propylamine and the like, and methylamine is more preferably used.

One of the amines may be used alone or two or more in combination.

The amount of the amines blended in the fibre opening solution is preferably 0.6 to 1.4 moles, more preferably 0.8 to 1.2 moles per 1 mole of dihydroxynaphthalene.

When the synthetic resin is an acrylic resin, examples of the monomer include methyl methacrylate, ethyl methacrylate, propyl methacrylate and butyl methacrylate, and methyl methacrylate is preferably used from the viewpoint of polymerization rate.

The particles used in the production method of the present invention are as described above, preferably silica particles, and the average particle size and the like are also as described above. The content of the particles in the fibre opening solution is preferably 10 to 1000 parts by mass, more preferably 50 to 500 parts by mass with respect to 100 parts by mass of the monomer.

The fibre opening solution preferably comprises a solvent. The solvent is preferably capable of dissolving the monomer. Specific examples of the solvent include, but are not limited to, alcohols such as methanol and ethanol, water, tetrahydrofuran, dioxane, dimethylformamide and the like. One of these may be used alone or two or more in combination. When two or more solvents are used in combination, for example, it is preferable to use alcohols and water in combination to make a mixed solvent.

The amount of the solvent is preferably 400 to 5000 parts by mass, and more preferably 600 to 4500 parts by mass per 100 parts by mass of the monomer.

In the production method of the present invention, after the fibre opening solution is prepared, a carbon fibre bundle composed of a plurality of carbon fibres is brought into contact with the fibre opening solution. The carbon fibre bundle used herein is as described above, and may be in the form of unidirectional continuous fibres, woven fabric, knitted fabric, non-woven fabric, and the like.

The fibre opening solution may be brought into contact with the carbon fibre bundles by impregnating the fibre opening solution with the carbon fibre bundles. Specifically, the fibre opening solution may be sprayed or applied to the carbon fibre bundles, or the carbon fibre bundles may be immersed in the fibre opening solution.

By bringing the fibre opening solution into contact with the carbon fibre bundles, the particles enter the gaps between the carbon fibres of the carbon fibre bundles, thereby opening the carbon fibre bundles.

The carbon fibre bundle brought into contact with the fibre opening solution is then heated. In the production method of the present invention, the monomer in the fibre opening solution is polymerized by heating to produce a synthetic resin such as a naphthoxazine resin or an acrylic resin, and then the particles are coated. With these synthetic resins, the particles can be adhered and cross-linked between the carbon fibres.

Thereafter, the synthetic resin may be carbonized by further heating to coat the surface of the particles with the carbon allotrope. As described above, the particles (coated particles) coated with the carbon allotrope can form a structure that cross-links between the carbon fibres. In addition, the carbon allotrope coated with the particles is preferably adhered to the carbon fibres. In addition, the carbon allotrope may cover the surface of the carbon fibres, may form a structure in which the carbon allotrope on the surface of the coated particles and the carbon allotrope covering the carbon fibres are connected.

In the production method of the present invention, the temperature during heating is not particularly limited as long as it is not less than the temperature at which the polymerization reaction occurs and / or the temperature at which the carbonization reaction occurs, but the heating temperature is usually 60 °C or higher, preferably 100 °C or higher, more preferably 140 °C or higher, further preferably 180 °C or higher, and particularly preferably 190 °C or higher, while the upper limit is usually 900 °C or lower, preferably 400 °C or lower, and further preferably 250 °C or lower.

When the synthetic resin is a naphthoxazine resin, the heating temperature is preferably in the range of 180 to 250 °C. When the heating temperature is 180 °C or higher, the monomer can be polymerized and carbonized to form a carbon allotrope. When the heating temperature is 250 °C or lower, the carbon allotrope can be formed from the naphthoxazine resin without deteriorating the carbon fibre.

In the manufacturing method of the present invention, the heating time is preferably 1 minute or more. If the heating time is 1 minute or more, the monomer can be polymerized and carbonized by the above-described heating to form a carbon allotrope. The heating time is more preferably 2 minutes or more. On the other hand, from the viewpoint of improving productivity, the heating time is preferably 30 minutes or less, more preferably 15 minutes or less, and further preferably 10 minutes or less. The heating time means the time for heating at the above heating temperature.

Although a large amount of monomer and a long reaction time were required in order to produce particles having large particle sizes, it is possible to open the carbon fibre bundle by coated particles having relatively large particle sizes and a uniform particle size with the method described above by using particles already synthesized. Furthermore, it is also possible to form cross-links between the carbon fibres and to bond the coated particles to the carbon fibres.

### [Fibre Reinforced Composite Material]

The fibre reinforced composite material of the present invention comprises the above-described opened carbon fibre bundle and a matrix resin impregnated in the opened carbon fibre bundle. The matrix resin may be any one of thermosetting resins and thermoplastic resins, but thermoplastic resins are preferable from the viewpoint of excellent impregnation properties and providing excellent bending modulus and bending strength to the fibre reinforced composite material.

Examples of the thermoplastic resin include polyolefin resins, acrylic resins, polyamide resins, polycarbonate resins, vinyl chloride resins, aromatic polyether ketones, and the like, and preferred are polyolefin resins having a good balance of viscosity and mechanical properties affecting the impregnation between the fibres when impregnated, vinyl chloride resins having high viscosity but excellent chemical resistance, and aromatic polyether ketones having heat resistance. Examples of the polyolefin resin include a polyethylene resin and a polypropylene resin.

The polyethylene resin is not particularly limited, and examples thereof include low-density polyethylene resins, medium-density polyethylene resins, high-density polyethylene resins, linear low-density polyethylene resins, linear medium-density polyethylene resins and linear high-density polyethylene resins.

The polypropylene resin is not particularly limited, and examples thereof include a propylene homopolymer and a copolymer of propylene and other olefins. The copolymer of propylene and other olefins may be either a block copolymer or a random copolymer. Examples of the olefins to be copolymerized with propylene include α-olefins such as ethylene, 1-butene, 1-pentene, 4-methyl-1-pentene, 1-hexene, 1-octene, 1-nonene, and 1-decene.

Examples of the aromatic polyether ketone include polyether ether ketone, polyether ketone ketone and the like, and polyether ether ketone is preferably used from the viewpoint of heat resistance and mechanical properties.

Examples of the thermosetting resin include epoxy resins, unsaturated polyester resins, phenol resins, melamine resins, polyurethane resins, and the like, with the unsaturated polyester resins and the epoxy resins being preferred.

The content of the opened carbon fibre bundles in the fibre-reinforced composite material is preferably 10 to 70 % by mass, more preferably 20 to 60 % by mass, and further preferably 30 to 50 % by mass. In the fibre-reinforced composite material, the content of the matrix resin is preferably 30 to 90 % by mass, more preferably 40 to 80 % by mass, and further preferably 30 to 60 % by mass.

The method for impregnating the matrix resin into the opened carbon fibre bundles is not particularly limited. Examples include a method in which a molten resin is extruded into a film form using a sheet die or the like, laminated on the opened carbon fibre bundles, and then compressed while being heated to impregnate the matrix resin into the opened carbon fibre bundles (film impregnation method), or an extrusion molding method in which the matrix resin and carbon fibre are pulled out from the die at once, and preferably used is the film impregnation method from the viewpoint of productivity.

### (Presumption of action)

A hypothesis is presented below as to why the use of the open fibre bundle of the present invention provides an effect of improving compatibility with the matrix resin.

As with the opened carbon fibre bundle of the present invention, the fibre bundle is sufficiently opened by the particles. Therefore, it is considered that the matrix resin is impregnated into the opened carbon fibre bundle in an appropriate amount so that the resin impregnation property is improved.

In this case, it is considered that the silica particles having particle sizes too large do not easily enter between the carbon fibres, and even if they do, the adhesion with the fibres is insufficient, so that they are pushed out of the carbon fibre bundles during the heating, pressurizing and impregnating with the matrix resin. Therefore, it is considered that only the fibre opening effect was obtained while the fibre direction of the fibre bundles was maintained by previously removing the particles which are considered to leave only a disturbance in the fibre direction and do not contribute to the fibre opening.

### EXAMPLES

Hereinafter, the present invention will be described in more details with reference to the Examples, but the present invention shall not be limited by these Examples.

### <Ingredients>

### [Carbon Fibre Woven Fabric]

3K woven fabric: product name "EC3C" manufactured by Taiwan Plastics Co., Ltd. (PAN-based carbon fibre bundles, number of filaments: 3000, weight per unit area: 200 g/m², thickness: 0.19 mm, plain weave)

### [Resin Film]

PC1: product name "Technolloy C000"manufactured by Sumitomo Chemical Co., Ltd. (polycarbonate resin film)
PEEK1: product name "Ketaspire", manufactured by Solvay Specialty Polymers Japan Co., Ltd. (polyether ether ketone resin film)
PPS1: product name "Torelina", manufactured by Toray Industries, Inc. (polyphenylene sulfide resin film)

### [Production Example 1]

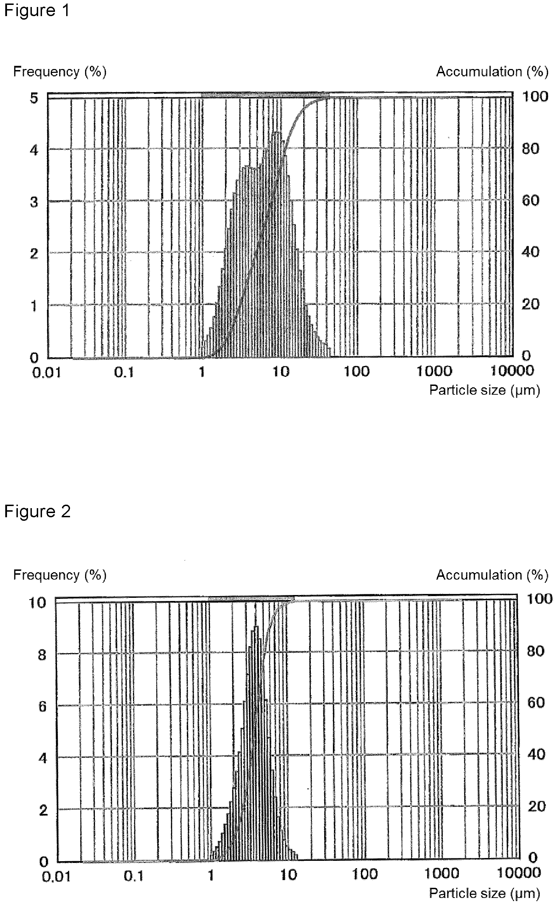

Silica particles ("ESPHERIQUE 150N", manufactured by JGC Catalysts Chemicals, Ltd., average particle size: 10 µm, specific surface area: 5 m²/g) were prepared and the result of measuring particle size distribution using a laser diffraction method is shown in FIG. 1. Further, the volume average particle size D50 (d50) calculated from the particle size distribution above was 6.1 µm. These particles are referred to as Particles 1 and are shown in Table 1.

### [Production Example 2]

Particles 1 were cut to particle sizes of 3 µm or less by using an air classification method. The obtained particles were referred to as Particles 2. The volume-average particle size D50 of Particles 2 was 9.7 µm. These particles are referred to as Particles 2 and are shown in Table 1.

### [Production Example 3]

Particles 1 were cut to particle diameters of 10 µm or more by using an air classification method. The obtained particles were referred to as Particles 3. The results of measurement of particle size distribution using a laser diffraction method are shown in FIG. 2. The volume-average particle size D50 of Particles 3 was 3.8 µm. These particles are referred to as Particles 3 and are shown in Table 1.

### [Production Example 4]

Particles 1 were cut to particle sizes of 3 µm or less and of 10 µm or more using an air classification method. The obtained particles were referred to as Particles 4. The volume-average particle size D50 of Particles 4 was 5.2 µm. These particles are referred to as Particles 4 and are shown in Table 1.

### [Production Example 5]

Product name "SNOWTEX PS-M" (particle size 80 to 150 nm (catalog value)) manufactured by Nissan Chemical Industries, Ltd. is defined as Particles 5. They are shown in Table 1.

### [Production Example 6]

Silica particles (product name "SEAHOSTER KE-P100" manufactured by JGC Catalysts Chemicals Inc.) were prepared, and particle size distribution was measured using a laser diffraction method. The volume average particle size D50 (d50) calculated from the particle size distribution was 1.08 µm. These particles are referred to as Particles 6 and are shown in Table 1.

### [Production Example 7]

Silica particles (product name: "SEAHOSTER KE-S100", manufactured by JGC Catalysts Chemicals Inc.) were prepared, and particle size distribution was measured using a laser diffraction method. The volume average particle size D50 (d50) calculated from the particle size distribution was 0.95 µm. These particles are referred to as Particles 7 and are shown in Table 1.

### [Production Example 8]

Carbon particles (product name "Bellpearl CR2-800", manufactured by AIR WATER INC.) were prepared, and particle-size distribution was measured using a laser diffraction method. The volume-average particle size D50 (d50) calculated from the particle-size distribution was 5.4 µm. These particles are referred to as Particles 8 and are shown in Table 1.

### [Production Example 9]

Resin particles (product name "Micropearl SP-203", manufactured by Sekisui Chemical Co., Ltd.) were prepared, and particle size distribution was measured using a laser diffraction method. The volume average particle size D50 (d50) calculated from the particle size distribution was 3.0 µm. These particles are referred to as Particles 9 and are shown in Table 1.

**[Table 1]**

| Particles | Type (Material) | With or without Classification | D10(µm) | D50(µm) | D90(µm) |
|---|---|---|---|---|---|
| Particles 1 | Silica particles | without | 2.2 | 6.1 | 15.1 |
| Particles 2 | Silica particles | Cut 3 µm or less | 5.4 | 9.7 | 12.5 |
| Particles 3 | Silica particles | Cut 10 µm or less | 2.1 | 3.8 | 6.1 |
| Particles 4 | Silica particles | Cut 3µm to 10µm | 3.5 | 5.2 | 7.7 |
| Particles 5 | Silica particles | without | - | 0.15 | - |
| Particles 6 | Silica particles | without | 0.81 | 1.08 | 1.46 |
| Particles 7 | Silica particles | without | 0.88 | 0.95 | 1.08 |
| Particles 8 | Carbon particles | without | 3.5 | 5.4 | 9.0 |
| Particles 9 | Resin particles | without | 2.7 | 3.0 | 3.2 |

### [Example 1]

A monomer comprising 10 parts by mass of 1.5-dihydroxynaphthalene, 4 parts by mass of a 40 % by mass aqueous methylamine solution, and 8 parts by mass of formalin (content of formaldehyde: 37 % by mass) was uniformly mixed with 600 parts by mass of ethanol water (content of ethanol: 50 % by mass) as a solvent to prepare a monomer solution in which the monomer was dissolved.

Next, 20 parts by mass of Particles 2 were added to the monomer solution to prepare Fibre opening solution 1.

Thereafter, a 3K fabric was prepared, immersed in Fibre opening solution 1, pulled up, and then heated at 200 °C for 2 minutes. By this heating, polymerization reaction and carbonization of the naphthoxazine resin occurred to produce amorphous carbon derived from the naphthoxazine resin, and a fibre opening carbon fibre bundle was obtained. The total amount of particles attached to the fibre opening carbon fibre bundle was 0.1 parts by mass with respect to 100 parts by weight of the carbon fibre.

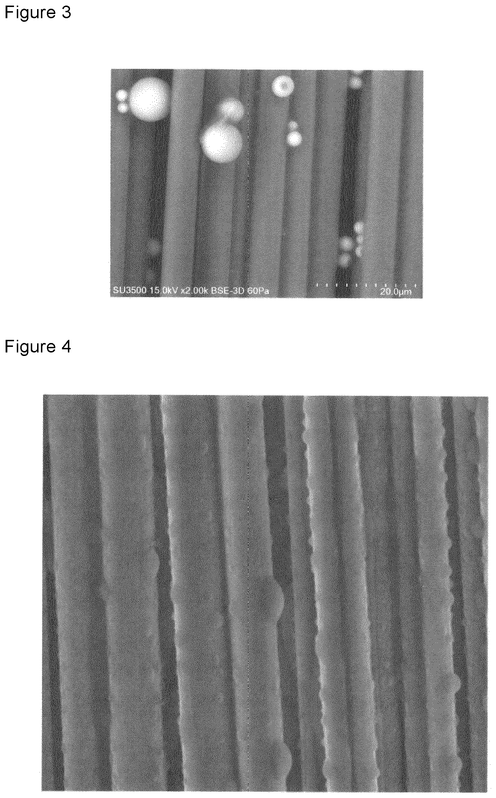

FIG. 3 shows an enlarged photograph of the obtained opened carbon fibre bundle observed using a scanning microscope (product name "SU-3500", manufactured by Hitachi High-Technologies Corporation). In the obtained opened carbon fibre bundle, it was observed that a coating film which seemed to be amorphous carbon was formed on the surface of the silica particles as a raw material. Therefore, it is considered that the fibres were opened by core-shell particles having silica particles as the core and amorphous carbon on the surface, entering between the carbon fibres.

Both sides of the obtained open fibre bundles are laminated with a PC1 film and then compressed at a pressure of 2 MPa for 3 minutes while being heated to 270 °C to impregnate the polycarbonate resin into the reinforced fibre bundles, thereby obtaining a carbon fibre-reinforced composite (prepreg) having a thickness of 250 µm and a carbon fibre content (volume%) in the fibre reinforced composite of 48 %.

### <Bending Strength>

A plurality of the above-described carbon fibre-reinforced composites were laminated and integrated by heat fusion to prepare a test piece. The bending elastic modulus and bending strength of the obtained test piece were measured in accordance with JIS K7074. The evaluation results are shown in Table 2.

### [Example 2]

A carbon fibre-reinforced composite was produced and evaluated in the same manner as in Example 1 except that Particles 2 were changed to Particles 3. The evaluation results are shown in Table 2.

### [Example 3]

A carbon fibre-reinforced composite was produced and evaluated in the same manner as in Example 1 except that Particles 2 were changed to Particles 4. The evaluation results are shown in Table 2.

### [Example 4]

A carbon fibre-reinforced composite was produced and evaluated in the same manner as in Example 1 except that Particles 2 were changed to Particles 8. The evaluation results are shown in Table 2.

### [Example 5]

A carbon fibre-reinforced composite was produced and evaluated in the same manner as in Example 1 except that Particles 2 were changed to Particles 9. The evaluation results are shown in Table 2.

### [Example 6]

A carbon fibre-reinforced composite was produced and evaluated in the same manner as in Example 1 except that PC1 was changed to PEEK1. The evaluation results are shown in Table 2.

### [Example 7]

A carbon fibre-reinforced composite was produced and evaluated in the same manner as in Example 1 except that PC1 was changed to PPS1. The evaluation results are shown in Table 2.

### [Example 8]

A carbon fibre reinforced composite was produced and evaluated in the same manner as in Example 4 except that Particles 8 were changed to Particles 6 and the PC1 was changed to the PEEK1. The evaluation results are shown in Table 2.

### [Comparative Example 1]

A carbon fibre-reinforced composite was produced and evaluated in the same manner as in Example 1 except that Particles 2 were changed to Particles 1. The evaluation results are shown in Table 2.

### [Comparative Example 2]

A carbon fibre-reinforced composite was produced and evaluated in the same manner as in Example 1 except that Particles 2 were changed to Particles 5. FIG. 4 shows an image taken by a scanning electron microscope, and the evaluation results are shown in Table 2.

### [Comparative Example 3]

A carbon fibre reinforced composite was produced and evaluated in the same manner as in Comparative Example 1 except that PC1 was changed to PEEK1. The evaluation results are shown in Table 2.

### [Comparative Example 4]

A carbon fibre-reinforced composite was produced and evaluated in the same manner as in Comparative Example 3 except that Particles 1 were changed to Particles 7. The evaluation results are shown in Table 2.

**[Table 2]**

| | Particles | Matrix Resin | Bending Strength (MPa) |
|---|---|---|---|
| Ex. 1 | Particles 2 | PC1 | 395 |
| Ex. 2 | Particles 3 | PC1 | 430 |
| Ex. 3 | Particles 4 | PC1 | 380 |
| Ex. 4 | Particles 8 | PC1 | 528 |
| Ex. 5 | Particles 9 | PC1 | 515 |
| Ex. 6 | Particles 2 | PEEK1 | 961 |
| Ex. 7 | Particles 2 | PPS1 | 835 |
| Ex. 8 | Particles 6 | PEEK1 | 956 |
| Comp. Ex. 1 | Particles 1 | PC1 | 360 |
| Comp. Ex. 2 | Particles 5 | PC1 | 214 |
| Comp. Ex. 3 | Particles 1 | PEEK1 | 775 |
| Comp. Ex. 4 | Particles 7 | PEEK1 | 693 |

From the above evaluation results, it was found that an open fibre bundle containing particles in which the volume average particle size D50 is within the prescribed ranges and the maximum particle size or the minimum particle size is controlled has higher bending strength than the system using particles in which neither the maximum particle size nor the minimum particle size is controlled. This is considered because a high opening effect was obtained by excluding particles having large particle sizes which cannot be introduced between the fibres and particles which do not contribute to opening even if they were introduced between the fibres.

## Claims

1. An opened carbon fibre bundle comprising a carbon fibre bundle and particles having a volume average particle size D50 of 1 µm to 13 µm and a volume average particle size D90 of 13 µm or less in the carbon fibre bundle.

2. The opened carbon fibre bundle according to claim 1, wherein the content of the particles contained in the opened carbon fibre bundle is 0.01 to 0.20 parts by mass per 100 parts by mass of the carbon fibres.

3. The opened carbon fibre bundle according to claim 1 or 2, wherein the particles are adhered to the surface of the carbon fibre by a synthetic resin or a carbon allotrope.

4. The opened carbon fibre bundle according to any one of claims 1 to 3, wherein the synthetic resin is an epoxy resin and the carbon allotrope comprises amorphous carbon.

5. The opened carbon fibre bundle according to any one of claims 1 to 4, wherein the minimum particle size of the particles is 1.5 µm or more.

6. A fibre-reinforced composite material comprising an opened carbon fibre bundle according to any one of claims 1 to 5 and a matrix resin impregnated into the opened carbon fibre bundle.

7. A method for producing an opened carbon fibre bundle, comprising the step of bringing a carbon fibre bundle into contact with a fibre opening solution comprising particles having a volume average particle size D50 of 1 µm to 13 µm and a volume average particle size D90 of 13 µm or less and an organic solvent.

8. The method according to claim 7, wherein the particles are obtained through a classification step of removing particles having a maximum particle size or more.

9. The method according to claim 7 or 8, wherein the particle concentration of the fibre opening solution is 1 to 10 % by mass.

10. The method according to any one of claims 7 to 9, wherein the organic solvent comprises at least one selected from the group consisting of alcohols having 1 to 10 carbon atoms, ketones having 1 to 6 carbon atoms, sulfoxides having 1 to 10 carbon atoms, esters having 1 to 6 carbon atoms, ethers having 1 to 10 carbon atoms, and halogenated hydrocarbons having 1 to 6 carbon atoms.
